# EUROPÄISCHE PATENTSCHRIFT

(11) **EP 1 965 992 B1**
(45) Veröffentlichungstag und Bekanntmachung des Hinweises auf die Patenterteilung: **10.07.2013**
(21) Anmeldenummer: 06819935.5
(22) Anmeldetag: 11.12.2006
(51) Int. Cl.: B60C 23/06, B60T 8/172

(54) **VERFAHREN ZUR BESTIMMUNG ABSOLUTER REIFENABROLLUMFÄNGE UND REIFENDRUCKKONTROLLSYSTEM**
METHOD FOR DETERMINING ABSOLUTE TYRE ROLLING CIRCUMFERENCES AND TYRE PRESSURE CONTROL SYSTEM
PROCEDE DE DETERMINATION DE LA CIRCONFÉRENCE ABSOLUE DE ROULEMENT DE PNEUS ET SYSTÈME DE CONTRÔLE DE LA PRESSION DE PNEUS

(30) Priorität: 23.12.2005 DE 102005062367; 27.11.2006 DE 102006055847
(43) Veröffentlichungstag der Anmeldung: 10.09.2008
(73) Patentinhaber: Continental Teves AG & Co. oHG, 60488 Frankfurt (DE)
(72) Erfinder: GRIESSER, Martin, 65760 Eschborn (DE); KÖBE, Andreas, 64625 Bensheim (DE); SCHREINER, Frank, 61381 Friedrichsdorf (DE); LÜKE, Stefan, 57462 Olpe (DE); IRTH, Markus, 55252 Mainz-kastel (DE); FISCHER, Daniel, 65824 Schwalbach (DE); SUSSMANN, Christian, 61440 Oberursel (DE)
(86) Internationale Anmeldenummer: PCT/EP2006/069544
(87) Internationale Veröffentlichungsnummer: WO 2007/074048

(56) Entgegenhaltungen:
- EP-A- 1 336 513
- EP-A- 1 600 345
- WO-A-01/19656
- DE-A1- 10 238 525
- DE-A1- 19 532 331
- GB-A- 2 326 007

## Beschreibung

Die Erfindung betrifft ein Verfahren gemäß Oberbegriff von Anspruch 1, dessen Verwendung sowie ein Reifendruckkontroll-system gemäß Oberbegriff von Anspruch 13.

Es sind so genannte direkt messende Reifendrucküberwachungssysteme bekannt, wie z.B. in der Anmeldung DE 199 26 616 C2 beschrieben, welche mittels Drucksensoren in den einzelnen Reifen den jeweiligen Druck in dem zugehörigen Rad ermitteln. Es sind weiterhin so genannte indirekt messende Reifendrucküberwachungssysteme (DDS: Deflation Detection System) bekannt, wie z.B. aus der DE 100 58 140 A1, welche aus Hilfsgrößen, z.B. durch Vergleich der Abrollumfänge der einzelnen Räder, einen Druckverlust ermitteln können.

Aus der EP 0 578 826 B1 geht eine Reifendruckbestimmungsvorrichtung hervor, welche auf Basis von Reifenschwingungen einen Druckverlust in einem Reifen ermittelt.

In der WO 01/87647 A1 ist ein Verfahren und eine Vorrichtung zur Reifendrucküberwachung beschrieben, welche/s ein auf der Erfassung von Radradien basierendes Reifendrucküberwachungssystem und ein auf der Auswertung von Schwingungseigenschaften basierendes Reifendrucküberwachungssystem kombiniert

Ein Verfahren zur Bestimmung der absoluten Abrollumfänge der Räder eines Kraftfahrzeuges aus den Raddrehzahlinformationen wird in der DE 10 2005 014 099 A1 offenbart. Hierbei wird die Zeitdifferenz zwischen dem Auftreten korrespondierender Vibrationen in den Raddrehzahlsignalen an Vorder- und Hinterrad derselben Fahrzeugseite verwendet, um eine absolute Fahrzeuggeschwindigkeit und die absoluten Abrollumfänge der vier Räder zu bestimmen.

Aufgabe der Erfindung ist es, ein alternatives Verfahren zur Bestimmung der absoluten Reifenabrollumfänge eines Kraftfahrzeuges sowie ein verbessertes Reifendrucküberwachungssystem bereitzustellen.

Diese Aufgabe wird erfindungsgemäß durch das Verfahren nach Anspruch 1 sowie ein Reifendruckkontrollsystem nach Anspruch 13 gelöst.

Der Erfindung liegt der Gedanke zugrunde, Raddrehzahlinformationen und Signale einer Abstandssensorik auszuwerten, um absolute Reifenabrollumfänge zu bestimmen bzw. eine verbesserte Reifendrucküberwachung durchzuführen. Die bestimmten Reifenabrollumfänge können zur Verbesserung der Regelalgorithmen und/oder der Bewarnung bei elektronischen Systemen dienen, wie beispielsweise Antiblockiersystem, elektronisches Stabilitätsprogramm, Traktionskontrolle, aktives Fahrwerk, aktiver Überrollschutz, elektronische Bremskraftverteilung oder Reifendrucküberwachung.

Unter dem Begriff "Anzahl von Radumdrehungen" werden erfindungsgemäß nicht nur ganzzahlige, d.h. "ganze", Radumdrehungen verstanden, sondern z.B. auch halbe oder viertel Radumdrehungen oder sonstige Bruchteile von Radumdrehungen (z.B. 0,27 Radumdrehungen) oder auch gebrochenzahlige Radumdrehungen (z.B. 3,46 Radumdrehungen).

Bevorzugt werden die Raddrehzahlinformationen einer ABS-Sensorik verwendet.

Verfügt das Fahrzeug über ein indirekt messendes Reifendrucküberwachungssystem, in welchem aus dem Drehverhalten der Räder auf einen Druckverlust geschlossen wird, oder über ein kombiniertes Reifendrucküberwachungssystem, welches ein indirekt und ein direkt messenden Reifendrucküberwachungssystem umfasst, so liegen die Raddrehzahlsignale bereits im Steuergerät des Reifendrucküberwachungssystem vor. Bevorzugt wird die Bestimmung der Reifenabrollumfänge dann in diesem Steuergerät durchgeführt.

Ebenso ist es bevorzugt, die Signale der Abstandssensorik eines Systems zur Parklenkunterstützung, zur Kollisionsvermeidung, eines Fahrzeugsicherheitssystems oder eines Fahrerassistenzsystems zu verwenden. Besonders bevorzugt wird in solchen Systemen mindestens ein Ultraschallsensor, ein Infrarotsensor oder ein Radargerät eingesetzt. Ganz besonders bevorzugt werden Abstandsensoren, welche in Bezug auf das Fahrzeug nach hinten und/oder nach vorne und/oder seitlich ausgerichtet sind, verwendet.

Gemäß einer bevorzugten Ausführungsform des erfindungsgemäßen Verfahrens werden die absoluten Abrollumfänge aus einem gefahrenen Weg, welcher aus den anhand des Abstandssensors oder der Abstandssensoren ermittelten Abständen bestimmt wird, und der Anzahl der dabei durchgeführten Radumdrehungen jedes Rades, welche aus den Drehzahlsignalen des Rades bestimmt wird, bestimmt. Ein Vorteil dieses Bestimmungsverfahrens ist die schnelle und direkte Verknüpfung von zurückgelegtem Weg und zugehörigen Radumdrehungen. Besonders bevorzugt werden auf diese Art die Abrollumfänge mehrmals bestimmt und die bestimmten Abrollumfänge gemittelt.

Bevorzugt werden die Abstände während der Fahrt, z.B. auf der Autobahn oder der Landstrasse, ermittelt, indem mindestens ein feststehendes Objekt als Referenzpunkt verwendet wird. Besonders bevorzugt ist der Referenzpunkt eine Brücke oder ein Verkehrsschild.

Ebenso ist es bevorzugt, dass die Abrollumfänge als Funktion der Fahrzeuggeschwindigkeit bestimmt bzw. eingelernt werden.

Gemäß dem erfindungsgemäßen Verfahren werden die absoluten Abrollumfänge als Parameter eines Berechnungsmodells zur Berechnung der Bahn des Fahrzeuges durch Vergleich von berechneten und mittels des/der Abstandssensor(en) bestimmten Abständen bestimmt. Hierbei werden die Abrollumfänge besonders bevorzugt iterativ über mehrere Vergleichszyklen eingelernt. Ein Vorteil dieses Bestimmungsverfahrens liegt darin, dass gleichzeitig das Berechnungsmodell, welches z.B. bei der Parklenkunterstützung verwendet wird, und die bestimmten Abrollumfänge, welche z.B. bei der Reifendrucküberwachung verwendet werden, verbessert wird.

Vorteilhafterweise werden die absoluten Abrollumfänge während des erfindungsgemäßen Verfahrens über einen Zeitraum, welcher über ein oder mehrere Fahrten andauert, bestimmt oder eingelernt. Hierdurch kann eine ausreichende statistische Signifikanz und damit zuverlässige Ergebnisse erreicht werden. Besonders vorteilhaft ist es, die Abrollumfänge über einen vorgegebenen Zeitraum zu bestimmen bzw. einzulernen oder die Abrollumfänge so lange zu bestimmen bzw. einzulernen, bis die Streuung oder Änderung der Werte unterhalb einer vorgegebenen Schwelle liegt.

Bevorzugt werden die absoluten Abrollumfänge auch während ein oder mehrerer spezieller Fahrmanöver bestimmt oder eingelernt.

Gemäß einer Weiterbildung des erfindungsgemäßen Verfahrens werden die absoluten Abrollumfänge während ein oder mehrerer, besonders bevorzugt zahlreicher, Einparkvorgänge und/oder Rangiervorgänge des Fahrzeuges bestimmt bzw. eingelernt. Hierbei können die Abrollumfänge als Parameter eines Berechnungsmodells zur Berechnung der Einpark- und/oder Rangierbahn oder direkt durch Verknüpfung von zurückgelegtem Weg und durchgeführten Radumdrehungen bestimmt werden.

Es ist bevorzugt, dass bei dem erfindungsgemäßen Verfahren die absoluten Abrollumfänge während einer Geradeausfahrbewegung des Fahrzeuges in Vorwärts- oder Rückwärtsrichtung bestimmt oder eingelernt werden. Dies hat den Vorteil, dass die von den Abstandssensoren entlang einer Luftlinie gemessenen Abstände bzw. Wege dem tatsächlich zurückgelegten Weg entsprechen. Ebenso ist es bevorzugt, dass bei der Bestimmung der absoluten Abrollumfänge als Parameter eines Berechnungsmodells Geradeausfahrbewegungen des Fahrzeuges in Vorwärts- oder Rückwärtsrichtung stärker berücksichtigt oder gewichtet werden als Fahrbewegungen mit einem Lenkwinkel ungleich etwa Null Grad. Hierdurch treten bei der Berechung weniger Modellfehler für die geschätzte (berechnete) Bahnkurve auf.

Gemäß einer weiteren bevorzugten Ausführungsform des erfindungsgemäßen Verfahrens werden die absoluten Abrollumfänge bestimmt oder eingelernt, wenn dies durch den Fahrer initiiert wird oder wenn eine Veränderung an den Reifen oder Rädern festgestellt wird. Besonders bevorzugt wird die Initiierung der Bestimmung der Abrollumfänge durch Betätigung eines Reset-Tasters durch den Fahrer eingeleitet. Ganz besonders bevorzugt handelt es sich bei dem Reset-Taster um den Reset-Taster, der auch zur Initiierung des Einlernvorgangs eines indirekten Reifendrucküberwachungssystems führt.

In einer weiteren Ausführungsform werden die Informationen oder Signale eines indirekten Reifendrucküberwachungssystems verwendet, um die Bestimmung der absoluten Abrollumfänge abzusichern. Hierzu erfolgt eine Bestimmung der absoluten Abrollumfänge nur in Zeiträumen, für welche kein oder ein gleichbleibender Verdacht für einen Reifendruckverlust von dem indirekten Reifendrucküberwachungssystems angezeigt wird.

Der Teilungsfehler eines Encoders eines Raddrehzahlsensors wird in einer bevorzugten Weiterbildung des erfindungsgemäßen Verfahrens bestimmt und zur Korrektur des Raddrehzahlsignals herangezogen. Hierdurch kann eine erhöhte Genauigkeit der bestimmten Abrollumfänge erreicht werden.

Die gemäß dem erfindungsgemäßen Verfahren bestimmten absoluten Abrollumfänge werden bevorzugt mindestens einem elektronischen Fahrzeugsystem zugeführt. Hier können sie zur Verbesserung der Regelalgorithmen und/oder der Bewarnung verwendet werden.

Ein Vorteil des erfindungsgemäßen Verfahrens ist, dass nur durch Auswertung der Raddrehzahlsignale der Räder, welche üblicherweise bereits im Rahmen eines Antiblockiersystems bestimmt werden und somit verfügbar sind, und der Signale einer Abstandssensorik, welche im Rahmen eines Systems zur Parklenkunterstützung vorhanden ist, eine Bestimmung der absoluten Abrollumfänge der Reifen durchgeführt wird. Hierdurch ist eine kostengünstige Realisierung des erfindungsgemäßen Verfahrens möglich. Die Informationen über die absoluten Abrollumfänge können dann einem oder mehreren elektronischen Systemen, z.B. einem indirekt oder direkt messenden Reifendrucküberwachungssystem oder einem elektronischen Bremssystem, zur Verfügung gestellt werden. Somit bietet das erfindungsgemäße Verfahren den Vorteil, mit wenig Aufwand und Kosten verschiedene Systeme zu verbessern.

Die Erfindung betrifft auch die Verwendung des erfindungsgemäßen Verfahrens in einem indirekt und/oder direkt messenden Reifendruckkontrollsystem, einem System zur Bestimmung von Reifeneigenschaften und/oder zur Bestimmung des Reifentyps, oder einem elektronischen Bremssystem. Bei Verwendung des erfindungsgemäßen Verfahrens in einem indirekt und/oder direkt messenden Reifendruckkontrollsystem werden die bestimmten absoluten Abrollumfänge zur Verbesserung der Erkennung eines Reifendruckverlustes eingesetzt. Besonders bevorzugt wird das erfindungsgemäße Verfahren in einem Antiblockiersystem, einem Antriebsschlupfregelsystem oder einem elektronischen Stabilitätsprogramm zur Verbesserung der Bremsdruckregelung verwendet.

Gemäß einer bevorzugten Ausführungsform des erfindungsgemäßen Reifendruckkontrollsystems umfasst dieses eine Einheit, in welcher aus den Raddrehzahlsignalen und den von dem/den Abstandssensor(en) bestimmten Abständen absolute Reifenabrollumfänge ermittelt werden.

Es ist außerdem bevorzugt, dass in dem erfindungsgemäßen Reifendruckkontrollsystem ein erfindungsgemäßes Verfahren durchgeführt wird.

Weitere bevorzugte Ausführungsformen ergeben sich aus den Unteransprüchen und der nachfolgenden Beschreibung an Hand einer Figur.

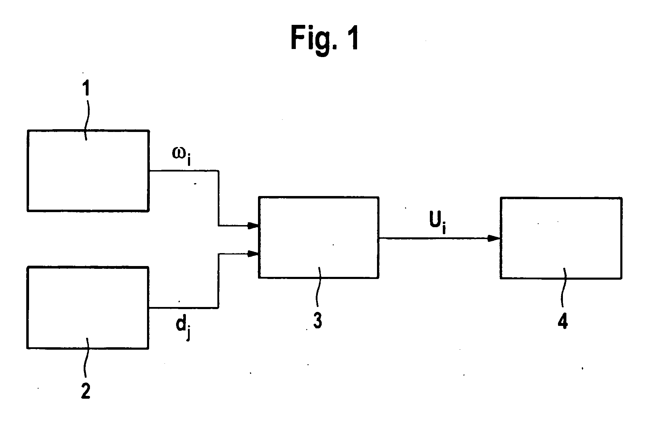

Es zeigt
- Fig. 1: in schematischer Darstellung ein Ausführungsbeispiel eines erfindungsgemäßen Verfahrens.

In Fig. 1 ist ein Ausführungsbeispiel eines erfindungsgemäßen Verfahrens schematisch als Flussdiagramm dargestellt. In Block 1 werden die Raddrehzahlen ωᵢ (der Index i steht für die verschiedenen Räder, z.B. i=1 (vorne rechts), 2 (vorne links), 3 (hinten rechts) und 4 (hinten links) bei einem vierrädrigen Fahrzeug) der Räder oder Größen, welche mit diesen direkt zusammenhängen, wie z.B. Umlaufzeiten der Räder oder die Anzahl von Radumdrehungen, erfasst. Hierzu werden z.B. die Raddrehzahlsensoren eines Antiblockiersystems verwendet. Durch eine Abstandssensorik, z.B. einer Kraftfahrzeugvorrichtung zur Unterstützung eines Fahrers beim Einparken oder eines Kollisionsvermeidungssystems, werden in Block 2 Abstände dⱼ, z.B. zwischen Anbringungsort eines Abstandssensors und einem Objekt/Hindernis, vermessen. Die bestimmten Raddrehzahlen ωᵢ und Abstände dⱼ werden in Block 3 in Beziehung gesetzt, ausgewertet und daraus absolute Abrollumfänge Uᵢ der Reifen bestimmt. Die absoluten Abrollumfänge Uᵢ werden dann einem elektronischen Fahrzeugsystem 4, z.B. einem indirekt oder direkt messenden Reifendrucküberwachungssystem oder einem elektronischen Bremssystem, zur Verfügung gestellt.

Die kombinierte Auswertung 3 der vorstehend genannten Signale ωᵢ und dⱼ lässt einen Rückschluss auf den absoluten Reifenabrollumfang Uᵢ eines jeden Reifens zu. Die Verknüpfung von Raddrehzahlen ωᵢ und Abständen dⱼ geschieht z.B. bei Einparkvorgängen und/oder beim Rangieren innerhalb einer Parklücke bis zur endgültigen Parkposition. Hierbei wird die zurückgelegte Wegstrecke über die Abstandssensoren durch Differenzbildung von Abständen dⱼ ermittelt und in Relation zu den dabei durchgeführten Radumdrehungen, welche sich aus den Raddrehzahlen ωᵢ ergeben, gesetzt. Dies ermöglicht die Ermittlung absoluter Abrollumfänge Uᵢ.

Gemäß eines ersten Ausführungsbeispiels werden die Abstände während der "normalen" Fahrt, z.B. auf der Autobahn oder der Landstrasse und dabei bevorzugt auf geraden Strecken, ermittelt. Hierzu wird ein feststehendes Objekt, z.B. eine Brücke oder ein Verkehrsschild, als Referenzpunkt verwendet. Durch Anpeilung des Referenzpunktes und Vermessung des Abstandes zum Referenzpunkt kann ein Zusammenhang zwischen zurückgelegtem Weg und Anzahl der Radumdrehungen hergestellt werden. Aufgrund des Größenwachstums von Reifen mit der Geschwindigkeit muss dabei die Abhängigkeit von der Fahrzeuggeschwindigkeit berücksichtigt werden. Die absoluten Reifenabrollumfang Uᵢ der Reifen werden daher als Funktion der Fahrzeuggeschwindigkeit bestimmt bzw. eingelernt.

In einem zweiten Ausführungsbeispiel wird beim geraden Zurücksetzen in einer Parklücke durch einen nach hinten ausgerichteten Abstandssensor der zurückgelegte Weg, z.B. als Änderung des Abstandes dⱼ zu einem dahinter parkenden Fahrzeug, vermessen. Dieser wird mit den mittels der Raddrehzahlsensoren gemessenen Radumdrehungen in Beziehung gesetzt, und so die absoluten Reifenabrollumfang Uᵢ der Reifen bestimmt.

Gemäß einem anderen Ausführungsbeispiel wird die Länge einer Parklücke beim Vorbeifahren an der Lücke durch seitlich ausgerichtete Abstandssensoren oder beim Stehen in der Parklücke durch nach vorne und hinten ausgerichtete Abstandssensoren vermessen. Aus dieser Längeninformation der Parklücke und den beim Vorbeifahren bestimmten Raddrehzahlen ωᵢ werden dann die absoluten Reifenabrollumfang Uᵢ der Reifen bestimmt.

In einem weiteren Ausführungsbeispiel werden die absoluten Abrollumfänge Uᵢ bei einem Verfahren zum Lenken in eine Parklücke als Modellparameter bestimmt. Solche Verfahren, welche ein paralleles Einparken voll- oder halbautomatisch ermöglichen, führen dies üblicherweise in folgenden Schritten durch:
- Vermessen der Parklücke beim Vorbeifahren (z.B. mittels zur Seite gerichteter Abstandssensoren),
- Anzeige, ob Parklücke ausreichend groß ist, und ob das Fahrzeug sich innerhalb eines gültigen Startbereichs für den Einparkvorgang befindet,
- Berechnung einer Bahn zum Einfahren in die Parklücke,
- Abfahren der Bahn bei gleichzeitiger Korrektur der Bahn, und
- Rangieren innerhalb der Parklücke.

Bei einem solchen Verfahren wird erfindungsgemäß ein Lernalgorithmus durchgeführt, welcher nach Einfahren in die Parklücke die Differenz zwischen einem nach einem auf Basis von Raddrehzahlinformationen rechnenden Modell vorhergesagten und dem, z.B. mittels nach hinten gerichteter Abstandssensoren, gemessenen Abstand dⱼ bis zur hinteren Parklückenbegrenzung miteinander vergleicht. Zur ersten Vorhersage werden dabei Standardwerte für den Abrollumfang Uᵢ der Reifen herangezogen und eine Standardbahnkurve abhängig vom Lenkwinkel verwendet. Durch den Vergleich von vorhergesagtem Abstand und über die Abstandssensorik gemessenem Abstand dⱼ kann der aktuelle Modellfehler ermittelt werden und kontinuierlich durch den Lernalgorithmus verringert werden. Die dabei kontinuierlich zu optimierenden Modellparameter sind die Reifenabrollumfänge Uᵢ und ein Parameter der den Zusammenhang zwischen Lenkwinkel und Fahrzeugbahnkurve beschreibt.

Die ermittelten verbesserten Modellparameter, d.h. die verbesserten Reifenabrollumfänge Uᵢ, bzw. die Modellabweichung werden gespeichert und für den nächsten Parkvorgang und/oder im nächsten Zündungslauf wieder als Startwerte verwendet. Abhängig von dieser Abweichung und dem Vertrauen in den Wert der nach hinten gerichteten Abstandssensorik kann beim nächsten Einparkvorgang der Anfang der Parklücke entsprechend verschoben werden oder die im Rahmen des Modells berücksichtigten Sicherheitsabstände verkleinert oder vergrößert werden.

In einem anderen Ausführungsbeispiel wird beim Rangieren innerhalb der Parklücke sowie in der endgültigen Parkposition durch die nach vorne und nach hinten gerichteten Abstandssensoren die Parklückenlänge gemessen. Die Abweichung zwischen der nach dem Berechnungsmodell mit angenommenen Abrollumfänge Uᵢ vorhergesagten Parklückenlänge und der gemessenen Parklückenlänge kann gespeichert werden. Mit einem Faktor, der die Zuverlässigkeit der gemessenen Abstandswerte angibt, können die Reifenabrollumfänge Uᵢ angepasst werden, um beim nächsten Einparkvorgang eine präzisere Vorhersage machen zu können und damit präziser einparken zu können.

Bevorzugt werden die Raddrehzahlen ωᵢ und die Abstände dⱼ bei Fahrsituationen mit einem Lenkwinkel von etwa Null Grad, d.h. bei annährender Geradeausfahrt, miteinander verknüpft. So wird sichergestellt, dass die durch die Abstandssensoren vermessene "Luftlinie" auch der gefahrenen Wegstrecke entspricht.

Bei einer Bestimmung der Reifenabrollumfänge Uᵢ anhand eines Parameter-Modells werden Fahrsituationen mit einem Lenkwinkel von etwa Null Grad, d.h. annährende Geradeausfahrt, besonders berücksichtigt bzw. gewichtet, da hier keine lenkwinkelabhängigen Modellfehler für die geschätzte (berechnete) Bahnkurve berücksichtigt werden müssen.

Für eine möglichst genaue Bestimmung der Reifenabrollumfänge Uᵢ ist eine ausreichende Genauigkeit der verwendeten, insbesondere vor- und zurückgewandten, Abstandssensorik notwendig.

Ebenso ist es zur Verbesserung der erzielten Genauigkeit von Vorteil, wenn der Teilungsfehler jedes Encoders der Raddrehzahlsensoren während der Fahrt gelernt wird. Die gelernten Teilungsfehler werden dann jeweils zur Korrektur der Raddrehzahlen ωᵢ verwendet. Eine Korrektur ist besonders bei der Auswertung von Bruchteilen von Radumdrehungen relevant.

Außerdem ist es vorteilhaft, die Reifenabrollumfänge Uᵢ durch langfristige Beobachtung, z.B. über zahlreiche Einpark - und/oder Rangiervorgänge, zu bestimmen.

In einem weiteren Ausführungsbeispiel des erfindungsgemäßen Verfahrens bzw. Reifendrucküberwachungssystems ist eine Reset-Möglichkeit vorhanden, z.B. in Form eines Tasters oder über einen Menüpunkt im Bordcomputer, um dem System Veränderungen an den Reifen anzuzeigen. Nach dem Reset werden die Reifenabrollumfänge Uᵢ neu bestimmt oder eingelernt.

Das erfindungsgemäße Reifendrucküberwachungssystem bzw. das erfindungsgemäße Verfahren wird bevorzugt wie folgt kombiniert bzw. eingesetzt:
a. Kombination mit den bekannten indirekten Reifendruckkontrollsystemen, welche z.B. relative Abrollumfangsänderungen und veränderte Schwingungseigenschaften der Reifen bewerten.
   Wichtigste Vorteile:
   - erhöhte Robustheit durch Plausibilisierung der Signale untereinander, und
   - erhöhte Gesamtsystemverfügbarkeit, da unterschiedliche Einsatzbedingungen/Verfügbarkeitsbedingungen der Einzelsysteme.
b. Die ermittelten absoluten Reifenabrollumfänge Uᵢ können außerdem zur Identifikation des Reifentyps herangezogen werden.
   Vorteile:
   - Schwellen für die Minderdruckbewarnung eines indirekten Reifendruckkontrollsystems können reifenabhängig angepasst werden, und/oder
   - Identifikation stark abweichender Reifen.
c. Kombination mit einem direkt messenden Reifendrucküberwachungssystem oder anderen sensorbasierten Verfahren oder Vorrichtungen, wie z.B. Verfahren oder Vorrichtungen, welche die Reifenidentität ermitteln.

## Patentansprüche

1. Verfahren zur Bestimmung absoluter Abrollumfänge von Reifen eines Kraftfahrzeuges, bei dem die absoluten Abrollumfänge (Uᵢ) der Reifen durch eine Auswertung von Raddrehzahlsignalen (ωᵢ) bestimmt werden, **dadurch gekennzeichnet, dass** für die Bestimmung der absoluten Abrollumfänge (Uᵢ) außerdem Signale (dⱼ) von mindestens einem Abstandssensor herangezogen werden, wobei die absoluten Abrollumfänge (Uᵢ) als Parameter eines Berechnungsmodells zur Berechnung der Bahn des Fahrzeuges durch Vergleich von berechneten und mittels des/der Abstandssensor(en) bestimmten Abständen bestimmt werden.

2. Verfahren nach Anspruch 1, **dadurch gekennzeichnet, dass** der mindestens eine Abstandssensor
- in einer Vorrichtung oder einem Verfahren zur Unterstützung eines Fahrers beim Einparken oder Rangieren eines Kraftfahrzeuges, und/oder
- in einem Kollisionsvermeidungssystem, und/oder
- in einem Fahrzeugsicherheitssystem, und/oder
- in einem Fahrerassistenzsystem
verwendet wird.

3. Verfahren nach Anspruch 1 oder 2, **dadurch gekennzeichnet, dass** die absoluten Abrollumfänge (Uᵢ) aus einem gefahrenen Weg, welcher aus den Signalen (dⱼ) des mindestens einen Abstandssensors bestimmt wird, und der Anzahl der während des gefahrenen Weges durchgeführten Radumdrehungen jedes Rades, welche aus den Drehzahlsignalen (ωᵢ) des Rades bestimmt wird, bestimmt werden.

4. Verfahren nach mindestens einem der Ansprüche 1 bis 3, **dadurch gekennzeichnet, dass** die absoluten Abrollumfänge (Uᵢ) über einen Zeitraum, welcher über ein oder mehrere Fahrten andauert, bestimmt oder eingelernt werden.

5. Verfahren nach mindestens einem der Ansprüche 1 bis 4, **dadurch gekennzeichnet, dass** die absoluten Abrollumfänge (Uᵢ) während ein oder mehrerer spezieller Fahrmanöver bestimmt oder eingelernt werden.

6. Verfahren nach mindestens einem der Ansprüche 1 bis 5, **dadurch gekennzeichnet, dass** die absoluten Abrollumfänge (Uᵢ) während ein oder mehreren, insbesondere zahlreichen, Einparkvorgängen und/oder Rangiervorgängen des Fahrzeuges bestimmt oder eingelernt werden.

7. Verfahren nach mindestens einem der Ansprüche 1 bis 6, **dadurch gekennzeichnet, dass** die absoluten Abrollumfänge (Uᵢ) während einer Geradeausfahrbewegung des Fahrzeuges in Vorwärts- oder Rückwärtsrichtung bestimmt oder eingelernt werden oder dass bei der Bestimmung der absoluten Abrollumfänge (Uᵢ) als Parameter eines Berechnungsmodells Geradeausfahrbewegungen des Fahrzeuges in Vorwärts- oder Rückwärtsrichtung stärker berücksichtigt werden als Fahrbewegungen mit einem Lenkwinkel ungleich etwa Null Grad.

8. Verfahren nach mindestens einem der Ansprüche 1 bis 7, **dadurch gekennzeichnet, dass** die absoluten Abrollumfänge (Uᵢ) bestimmt oder eingelernt werden, wenn dies durch den Fahrer initiiert wird, insbesondere durch Betätigung eines Reset-Tasters, oder wenn eine Veränderung an den Reifen oder Rädern festgestellt wird.

9. Verfahren nach mindestens einem der Ansprüche 1 bis 8, **dadurch gekennzeichnet, dass** die absoluten Abrollumfänge (Uᵢ) nur dann bestimmt oder eingelernt werden, wenn die Informationen eines im Fahrzeug vorhandenen, insbesondere indirekten, Reifendrucküberwachungssystems keinen Reifendruckverlust anzeigen.

10. Verfahren nach mindestens einem der Ansprüche 1 bis 9, **dadurch gekennzeichnet, dass** der Teilungsfehler eines Encoders eines Raddrehzahlsensors bestimmt wird und zur Korrektur des Raddrehzahlsignals (ωᵢ) herangezogen wird.

11. Verfahren nach mindestens einem der Ansprüche 1 bis 10, **dadurch gekennzeichnet, dass** die absoluten Abrollumfänge mindestens einem elektronischen Fahrzeugsystem zugeführt werden.

12. Verwendung des Verfahrens nach einem der Ansprüche 1 bis 11
- in einem indirekt und/oder direkt messenden Reifenddruckkontrollsystem, oder
- in einem System zur Bestimmung von Reifeneigenschaften und/oder zur Bestimmung des Reifentyps, oder
- in einem elektronischen Bremssystem, insbesondere Antiblockiersystem, Antriebsschlupfregelsystem oder elektronischen Stabilitätsprogramm.

13. Reifendruckkontrollsystem zur Erkennung eines Druckverlustes an einem oder mehreren Reifen eines Fahrzeugs, in welchem ein Verfahren gemäß eines der Ansprüche 1 bis 11 durchgeführt wird, **dadurch gekennzeichnet, dass** dieses eine Einheit umfasst, in welcher aus Raddrehzahlsignalen (ωᵢ) und Signalen (dⱼ) von mindestens einem Abstandssensor eine Erkennung, und insbesondere Bewarnung, eines Druckverlustes an mindestens einem Reifen durchgeführt wird.

14. Reifendruckkontrollsystem nach Anspruch 13, **dadurch gekennzeichnet, dass** dieses eine Einheit umfasst, in welcher aus den Raddrehzahlsignalen (ωᵢ) und den Signalen (dⱼ) des mindestens einen Abstandssensors absolute Reifenabrollumfänge (Uᵢ) bestimmt werden.

15. Reifendruckkontrollsystem nach Anspruch 13 oder 14, **dadurch gekennzeichnet, dass** der/die verwendete(n) Abstandssensor(en) Teil einer Vorrichtung zur Unterstützung eines Fahrers beim Einparken oder Rangieren eines Kraftfahrzeuges, eines Kollisionsvermeidungssystems, eines Fahrzeugsicherheitssystems oder eines Fahrerassistenzsystems ist.

16. Reifendruckkontrollsystem nach mindestens einem der Ansprüche 13 bis 15, **dadurch gekennzeichnet, dass** der/die verwendete(n) Abstandssensor(en) relativ zum Fahrzeug nach vorne und/oder nach hinten und/oder seitlich ausgerichtet ist/sind.

## Claims

1. Method for determining absolute rolling circumferences of tyres of a motor vehicle, in which the absolute rolling circumferences (Uᵢ) of the tyres are determined by evaluating rotational speed signals (ωᵢ), **characterized in that** furthermore signals (dⱼ) of at least one distance sensor are used for determining the absolute rolling circumferences (Uᵢ), wherein the absolute rolling circumferences (Uᵢ) are determined as parameters of a calculation model for calculating the path of the vehicle by comparison of calculated distances and distances determined by means of the distance sensor/sensors.

2. Method according to Claim 1, **characterized in that** the at least one distance sensor is used
- in a device or a method for assisting a driver when parking or manoeuvring a motor vehicle, and/or
- in a collision avoidance system, and/or
- in a vehicle safety system, and/or
- in a driver assistance system.

3. Method according to Claim 1 or 2, **characterized in that** the absolute rolling circumferences (Uᵢ) are determined from a travelled distance, which is determined from the signals (dⱼ) of the at least one distance sensor, and the number of wheel revolutions of each wheel which are carried out during the distance travelled and which is determined from the rotational speed signals (ωᵢ) of the wheel.

4. Method according to at least one of Claims 1 to 3, **characterized in that** the absolute rolling circumferences (Uᵢ) are determined or learnt over a time period which lasts over one or more journeys.

5. Method according to at least one of Claims 1 to 4, **characterized in that** the absolute rolling circumferences (Uᵢ) are determined or learnt during one or more specific driving manoeuvres.

6. Method according to at least one of Claims 1 to 5, **characterized in that** the absolute rolling circumferences (Uᵢ) are determined or learnt during one or more, in particular numerous, parking processes and/or manoeuvring processes of the vehicle.

7. Method according to at least one of Claims 1 to 6, **characterized in that** the absolute rolling circumferences (Uᵢ) are determined or learnt during a straight-ahead travel movement of the vehicle in the forward direction or reverse direction, or **in that** during the determination of the absolute rolling circumferences (Uᵢ) they are taken into account to a greater extent as parameters of a calculation model for straight-ahead travel movements of the vehicle in the forward direction or reverse direction than travel movements with a steering angle which is unequal to approximately zero degrees.

8. Method according to at least one of Claims 1 to 7, **characterized in that** the absolute rolling circumferences (Uᵢ) are determined or learnt when this is initiated by the driver, in particular by actuation of a reset key or when a change in the tyres or wheels is detected.

9. Method according to at least one of Claims 1 to 8, **characterized in that** the absolute rolling circumferences (Uᵢ) are determined or learnt only when the information of a tyre pressure-monitoring system which is present in the vehicle and is, in particular, indirect, does not indicate a loss of tyre pressure.

10. Method according to at least one of Claims 1 to 9, **characterized in that** the pitch error of an encoder of a wheel rotational speed sensor is determined and is used to correct the wheel rotational speed signal (ωᵢ).

11. Method according to at least one of Claims 1 to 10, **characterized in that** the absolute rolling circumferences are fed to at least one electronic vehicle system.

12. Use of the method according to one of Claims 1 to 11,
- in a tyre final pressure control system which measures indirectly and/or directly, or
- in a system for determining tyre properties and/or for determining the type of tyre, or
- in an electronic brake system, in particular anti-lock brake system, traction control system or electronic stability program.

13. Tyre pressure control system for detecting a loss of pressure at one or more tyres of a vehicle in which a method according to one of Claims 1 to 11 is carried out, **characterized in that** the latter comprises a unit in which detection, in particular warning, of a loss of pressure at at least one tyre is carried out on the basis of wheel rotational speed signals (ωᵢ) and signals (dⱼ) of at least one distance sensor.

14. Tyre pressure control system according to Claim 13, **characterized in that** the latter comprises a unit in which absolute tyre rolling circumferences (Uᵢ) are determined from the wheel rotational speed signals (ωᵢ) and the signals (dⱼ) of the at least one distance sensor.

15. Tyre pressure control system according to Claim 13 or 14, **characterized in that** the absolute sensor or sensors used is/are part of a device for assisting a driver when parking or manoeuvring a motor vehicle, a collision avoidance system, a vehicle safety system or a driver assistance system.

16. Tyre pressure control system according to at least one of Claims 13 to 15, **characterized in that** the distance sensor or sensors used is/are oriented forwards and/or rearwards and/or to the side relative to the vehicle.

## Revendications

1. Procédé de détermination de circonférences de roulement absolues des pneus d'un véhicule automobile, dans lequel les circonférences de roulement absolues (Uᵢ) des pneus sont déterminées par une évaluation des signaux de vitesse de rotation de roue (ω₁), **caractérisé en ce que** pour la détermination des circonférences de roulement absolues (Uᵢ) des signaux (dⱼ) provenant d'au moins un capteur de distance sont en outre mis à contribution, dans lequel les circonférences de roulement absolues (U₁) sont déterminées comme paramètres d'un modèle de calcul pour calculer le trajet du véhicule en comparant les distances calculées et déterminées au moyen du/des capteur(s) de distance.

2. Procédé selon la revendication 1, **caractérisé en ce qu'**au moins un capteur de distance est employé
- dans un dispositif ou un procédé d'assistance à un conducteur lors du garage ou de la manoeuvre d'un véhicule automobile, et/ou
- dans un système d'évitement des collisions, et/ou
- dans un système de sécurité du véhicule, et/ou
- dans un système d'assistance au conducteur.

3. Procédé selon la revendication 1 ou 2, **caractérisé en ce que** les circonférences de roulement absolues (Uᵢ) sont déterminées d'après un chemin parcouru, qui est déterminé à partir des signaux (dⱼ) de l'au moins un capteur de distance, et le nombre de tours de roue de chaque roue effectués pendant le chemin parcouru, qui est déterminé à partir des signaux de vitesse de rotation (ω₁) de la roue.

4. Procédé selon au moins une des revendications 1 à 3, **caractérisé en ce que** les circonférences de roulement absolues (Uᵢ) sont déterminées ou consignées sur une période temporelle, qui dure sur un ou plusieurs trajets.

5. Procédé selon au moins une des revendications 1 à 4, **caractérisé en ce que** les circonférences de roulement absolues (Uᵢ) sont déterminées ou consignées pendant une ou plusieurs manoeuvres de conduite spéciales.

6. Procédé selon au moins une des revendications 1 à 5, **caractérisé en ce que** les circonférences de roulement absolues (Uᵢ) sont déterminées ou consignées pendant un ou plusieurs, notamment un grand nombre, de processus de garage et/ou processus de manoeuvre du véhicule.

7. Procédé selon au moins une des revendications 1 à 6, **caractérisé en ce que** les circonférences de roulement absolues (Uᵢ) sont déterminées ou consignées pendant un mouvement de conduite en ligne droite du véhicule dans la direction avant ou arrière ou **en ce que**, lors de la détermination des circonférences de roulement absolues (Uᵢ), des mouvements de conduite en ligne droite du véhicule dans la direction avant ou arrière sont pris en compte comme paramètres d'un modèle de calcul plus fortement que des mouvements de conduite avec un angle de direction différent d'environ zéro degré.

8. Procédé selon au moins une des revendications 1 à 7, **caractérisé en ce que** les circonférences de roulement absolues (Uᵢ) sont déterminées ou consignées quand ceci est amorcé par le conducteur, notamment en actionnant une touche de remise à zéro, ou quand une modification des pneus ou des roues est constatée.

9. Procédé selon au moins une des revendications 1 à 8, **caractérisé en ce que** les circonférences de roulement absolues (Uᵢ) sont déterminées ou consignées seulement quand les informations d'un système de surveillance de pression des pneus présent dans le véhicule, notamment indirect, n'affichent aucune perte de pression des pneus.

10. Procédé selon au moins une des revendications 1 à 9, **caractérisé en ce que** l'erreur de division d'un codeur d'un capteur de vitesse de rotation de roue est déterminée et est mise à contribution pour corriger le signal de vitesse de rotation de roue (ω₁).

11. Procédé selon au moins une des revendications 1 à 10, **caractérisé en ce que** les circonférences de roulement absolues sont acheminées à au moins un système de véhicule électronique.

12. Utilisation du procédé selon une des revendications 1 à 11
- dans un système de contrôle de pression des pneus à mesure indirecte et/ou directe, ou
- dans un système de détermination des propriétés de pneus et/ou de détermination du type de pneus, ou
- dans un système de freinage électronique, notamment un système antiblocage, un système d'antipatinage d'entraînement ou un programme de stabilité électronique.

13. Système de contrôle de pression des pneus pour détecter une perte de pression sur un ou plusieurs pneus d'un véhicule, dans lequel un procédé selon une des revendications 1 à 11 est mis en oeuvre, **caractérisé en ce que** celui-ci comprend une unité, dans laquelle une détection, et notamment une alerte, d'une perte de pression sur au moins un pneu est effectuée d'après les signaux de vitesse de rotation de roue (ω₁) et les signaux (dⱼ) provenant d'au moins un capteur de distance.

14. Système de contrôle de pression des pneus selon la revendication 13, **caractérisé en ce que** celui-ci comprend une unité, dans laquelle des circonférences de roulement absolues (Uᵢ) sont déterminées d'après les signaux de vitesse de rotation de roue (ω₁) et les signaux (dⱼ) d'au moins un capteur de distance.

15. Système de contrôle de pression de pneus selon la revendication 13 ou 14, **caractérisé en ce que** le/les capteur(s) de distance employé(s) font partie d'un dispositif d'assistance à un conducteur lors du garage ou de la manoeuvre d'un véhicule automobile, d'un système d'évitement des collisions, d'un système de sécurité du véhicule ou d'un système d'assistance au conducteur.

16. Système de contrôle de pression des pneus selon au moins une des revendications 13 à 15, **caractérisé en ce que** le/les capteur(s) de distance employé(s) est/sont orienté(s) vers l'avant et/ou vers l'arrière et/ou latéralement par rapport au véhicule.
